# EUROPEAN PATENT APPLICATION

(11) **EP 2 991 014 A1**
(43) Date of publication of application: **02.03.2016**
(21) Application number: 14306311.3
(22) Date of filing: 25.08.2014
(51) Int. Cl.: G06Q 20/02, G06Q 20/04, H04K 1/10, G06F 21/43, G06Q 20/34, G06Q 20/40

(54) **Distributing tokens for token-based transactions**

(71) Applicant: Oberthur Technologies, 92700 Colombes (FR)
(72) Inventor: Dottax, Emmanuelle, 92700 Colombes (FR); Sartori, Michele, 92700 Colombes (FR)
(74) Representative: Santarelli

(57) **Abstract**

A mobile device (10) receives a first token part (TOK) via a first communications channel (31) and receives a second token part (RND) via a second communications channel (33). The mobile device (10) stores the first token part (TOK) and the second token part (RND) at the mobile device (10). The first token part (TOK) and the second token part (RND) are for use in a token-based transaction between the mobile device (10) and an external device (40). The first token part (TOK) and the second token part (RND) are required for the token-based transaction. The second token part (RND) can have a period of validity. The mobile device (10) can receive a plurality of second token parts (RND) at spaced apart times. The second communications channel (33) can be a channel requiring authentication of a secure element at the mobile device (10), such as a Short Message Service (SMS) channel.

## Description

### TECHNICAL FIELD

This invention relates to distributing tokens for token-based wireless transactions.

### BACKGROUND

Near Field Communication (NFC) technology allows two devices to communicate in a wireless (i.e. non-contact) manner when the devices are brought into close proximity of one another. NFC devices can function either in 'card mode' or in 'reader mode'. To use an NFC device in card mode, the device is positioned within a relatively short range (e.g. several centimetres) of a reader. The reader emits a magnetic field, which is used by both the card and the reader to set up a radio communications channel. Standards relating to NFC devices have been issued by the International Organisation for Standardisation (ISO) and International Electrotechnical Commission (IEC). ISO/IEC 14443 defines the physical and software layers of the NFC communications channel between the card and reader.

NFC technology has been used in contactless smart cards and is now being incorporated into mobile devices, such as smart phones. By incorporating NFC technology into a smart phone, the smart phone can emulate a contactless smart card and can perform similar functions as a user would expect from a smart card.

The micro-processors used in smart cards are specifically adapted for executing applications, such as payment or ticketing applications, where the need for security is paramount. These micro-processors can be called 'secure elements'. A similar type of secure element is a Subscriber Identification Module (SIM) card of a mobile phone. One approach to emulating a secure element using an NFC device is to use the services of a SIM card. This can be done by hosting, for example, a payment application on the SIM card. In this arrangement the NFC device operates as an extension to the SIM card interface. At the application level, the reader passes ISO 7816 APDU commands across the NFC interface, which passes them on to the SIM card via the phone's Host Controller interface. In this arrangement, the payment application runs on the SIM card, and the NFC device just adds a contactless interface to the SIM card. From the security point of view this is the best arrangement as the application runs in a secure element and is as secure as it would be if it were hosted on a smart card. An example of this kind of arrangement is US 8,261,996.

Another approach is to run applications (e.g. payment or ticketing applications) in the mobile phone's runtime environment. One way of doing this is to delegate all security sensitive operations to a secure element. Another approach is to implement payment or ticketing applications that use 'tokens'. A token represents a contractual right, which might be for example, an amount of credit for use in a payment system, the right to use a service such as a transport service, or the right to enter a theatre. Tokens are generally issued by a central authority, a server, that keeps a list of all the tokens issued. When a token is used or spent it comes back to the central authority, which checks it against the list of issued tokens and authorises its use if it is in the list and has not been spent. The server then marks the token as spent. The security of this arrangement depends on the security of the link between the mobile device and the issuer of the tokens, and on the difficulty of stealing the tokens from the mobile device.

### SUMMARY

An aspect of the invention provides a method performed at a mobile device comprising: receiving a first token part via a first communications channel; receiving a second token part via a second communications channel; storing the first token part and the second token part at the mobile device), wherein the first token part and the second token part are for use in a token-based transaction between the mobile device and an external device, and wherein the first token part and the second token part are required for the token-based transaction.

The second token part can have a period of validity.

The step of receiving the second token part can receive a plurality of second token parts at spaced apart times.

The mobile device can receive a first of the second token parts and a second of the second token parts. The period of validity of the first of the second token parts can be based on a time when an acknowledgement of the second of the second token parts is received by a token issuing entity.

The second token part can have a lower number of bits than the first token part.

The second token part can be a pseudo-random string or a random string.

The step of receiving the second token part can further comprise receiving an identifier of the first token part that the second token part is associated with.

The second communications channel can be more secure, or more trusted, than the first communications channel.

The second communications channel can be a channel requiring authentication of a secure element at the mobile device.

The second communications channel can be a channel requiring authentication of a subscriber identity module of the mobile device.

The second communications channel can be a Short Message Service (SMS) channel.

The method can perform a token-based transaction between the mobile device and an external device using a wireless transmission protocol. The transaction can comprise: transmitting a token to the external device which is based on the first token part and the second token part.

The wireless transmission protocol can be a near field communication protocol. The wireless transmission protocol can use a third communications channel which is not the first communications channel or the second communications channel. The wireless transmission protocol can be a short-range protocol.

The token transmitted to the external device can comprise the first token part and the second token part. The token transmitted to the external device can comprise a token which is a function of the first token part and the second token part. The token transmitted to the external device can comprise a token which is computed by using the second token part as an encryption key for the first token part.

Another aspect of the invention provides a method performed at a token issuing entity comprising: transmitting to a mobile device a first token part via a first communications channel; transmitting to the mobile device a second token part via a second communications channel; wherein the first token part and the second token part are for use in a token-based transaction between the mobile device and an external device, and wherein the first token part and the second token part are required for the token-based transaction.

The second token part can have a period of validity and the step of transmitting to the mobile device a second token part can comprise transmitting to the mobile device a plurality of second token parts at spaced apart times.

Another aspect of the invention provides apparatus for use at a mobile device, wherein the apparatus is configured to perform any of the described or claimed methods. The apparatus can be configured to: receive a first token part via a first communications channel; receive a second token part via a second communications channel; store the first token part and the second token part at the mobile device, wherein the first token part and the second token part are for use in a token-based transaction between the mobile device and an external device, and wherein the first token part and the second token part are required for the token-based transaction.

Another aspect of the invention provides apparatus for use at a token-issuing entity, wherein the apparatus is configured to perform any of the described or claimed methods. The apparatus can be configured to: transmit to a mobile device a first token part via a first communications channel; transmit to the mobile device a second token part via a second communications channel; wherein the first token part and the second token part are for use in a token-based transaction between the mobile device and an external device, and wherein the first token part and the second token part are required for the token-based transaction.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

At least one example of the invention can have an advantage of improved resilience to man-in-the-middle type attacks, as first and second token parts are sent to a mobile device and both token parts are required for a token-based transaction.

### BRIEF DESCRIPTION OF THE DRAWINGS

Embodiments of the invention will be described, by way of example only, with reference to the accompanying drawings in which:
Figure 1 schematically shows a communications system for supporting transactions using tokens;
Figure 2 shows an example of communication between entities in the system of Figure 1;
Figure 3 schematically shows the communications system of Figure 1 and some possible sources of threat;
Figure 4 shows an example of communication between entities in the system of Figure 3;
Figure 5 schematically shows a mobile device in more detail.

### DETAILED DESCRIPTION

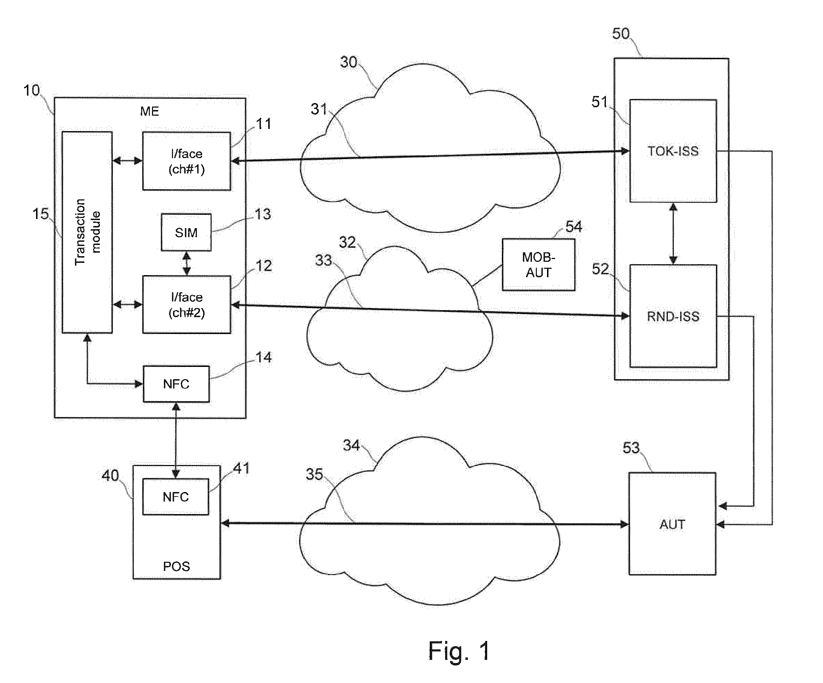

Figure 1 schematically shows a communications system for supporting transactions using tokens. The main entities in Figure 1 are a mobile device (ME) 10, a token-issuing entity 50, a point-of-sale device (POS) 40 and an authorisation entity 53. The mobile device 10 comprises a first communications interface 11 for communicating with the token-issuing entity 50 via a first communications channel 31. The mobile device 10 comprises a second communications interface 12 for communicating with the token-issuing entity 50 via a second communications channel 33. In Figure 1 the first communications channel 31 and the second communications channel 33 are shown using different communications networks 30, 32. However, the channels 31, 33 may use the same communications network for all, or part of, their respective paths between the mobile device 10 and the token-issuing entity 50. In one example, the first communications channel 31 is a data channel, such as a Hypertext Transfer Protocol Secure (HTTPS) communication channel, and the second communications channel 33 is a Short Message Service (SMS) channel. In an example, the data channel 31 may be carried over a network of a mobile operator which provides voice, text and data services to the mobile device 10. In another example the data channel 31 may be carried over a local Wi-Fi network which does not form part of the mobile operator's network. Wi-Fi networks are considered to be less secure, or less trusted, than the mobile operator's network and a man-in-the-middle type of attack is more likely to occur on such a network.

The mobile device 10 may be a mobile phone, smart phone, portable computer, laptop computer, tablet or any other device which is capable of performing the described functions.

The mobile device 10 comprises a Near Field Communication (NFC) interface 14. The NFC interface 14 allows wireless (contactless) communication between the mobile device 14 and an external device 40. The NFC interface 14 supports a NFC protocol such as ISO/IEC 14443. An example external device is shown as a point-of-sale device (POS) 40. The point-of-sale device (POS) 40 comprises an NFC interface 41. NFC interface 41 can also support a NFC protocol such as ISO/IEC 14443. In use, the NFC interface 14 of the mobile device 10 and the NFC interface 41 of the POS terminal 40 can communicate with one another. The mobile device 10 comprises a transaction module 15. The transaction module 15 is communicatively coupled with the communications interfaces 11, 12 and NFC interface 14 of the mobile device 10 and is configured to perform a token-based transaction with an external entity 40 using the NFC interface 14. The transaction module 15 may be implemented by software executed by a processor of the mobile device 10. When the mobile device ME is presented to a reader POS the physical proximity of the two devices sets up a radio communications channel. An application M2 running on the mobile device, communicates with an application, P1, running on the reader.

In accordance with examples of the invention, a transaction occurs between the mobile device 10 and a POS device 40 when a user of the mobile device 10 wishes to pay for goods, use a service, enter a venue, or some other activity requiring a transaction. A token is used during the transaction. A token represents a contractual right. Examples include an amount of credit for use in a payment system, the right to use a service such as a transport service (e.g. bus, train, tram), or the right to enter a venue (e.g. cinema, theatre, museum, gallery). Tokens are issued by the token issuing-entity 50. The token issuing-entity 50 records a list of all issued tokens. When a transaction is performed, a token is sent from the mobile device 10 to the external device 40. The authorisation entity 53 checks that the token is present in the list of the tokens issued by the token-issuing entity 50, and that the token has not already been spent. If the token is valid, the authorisation entity 53 then marks the token as spent.

In accordance with examples of the invention, a token issued by the token-issuing entity 50 comprises two token parts: TOK and RND. In Figure 1 the token-issuing entity 50 comprises an entity TOK-ISS 51 which issues the first token part TOK and an entity RND-ISS 52 which issues the second token part RND. TOK-ISS 51 and RND-ISS 52 may be separate servers connected across a network (e.g. a local or wide area network) or may be two processes run on the same server. TOK-ISS 51 and RND-ISS 52 may communicate via any kind of secure interprocess communication channel. The first token part TOK is generated by TOK-ISS 51 and is delivered to the mobile device 10 via the first communications channel 31. The second token part RND is generated by RND-ISS 52 and is delivered to the mobile device 10 via a second communications channel 33. The first token part TOK and the second token part RND are received by the mobile device 10 and stored at the mobile device 10. The first token part TOK and the second token part RND are for use in a token-based transaction between the mobile device 10 and an external device 40. Both the first token part TOK and the second token part RND are required for the token-based transaction. The token-issuing entity 50 stores the mobile phone number, or some other identifier, of the mobile device ME to which it issues tokens. The token-issuing entity 50 only sends the second token part RND to a mobile device having that pre-registered number/identifier. The identifier may be an International Mobile Subscriber Identity (IMSI).

The second communications channel 33 may be more secure than the first communications channel 31. For example, if the second communications channel is an SMS channel, the SIM card 13 of the mobile device participates in an authentication process before using the channel 33 and data is carried in an encrypted manner across the SMS delivery channel.

An authentication entity MOB-AUT 54 is associated with the communications network 32. The authentication entity MOB-AUT 54 is used to authenticate a subscriber of the network. In a GSM network, MOB-AUT 54 can authenticate the SIM card 13 during a communication exchange between MOB-AUT 54 and the SIM card 13. Although a SIM card 13 is shown, the mobile device ME may include some other 'secure element' hardware which allows a mobile phone subscriber to authenticate to a mobile phone network. Although the transaction module may not be implemented by a secure element, a part of the token, RND, is received over a channel which is secured by a secure element, such as a SIM card.

As described in more detail below, the transaction between the mobile device 10 and the external device 40 uses both the first token part TOK and the second token part RND. There are various ways in which the first token part and second token part may be used. In one example, the mobile device 10 may send both the first token part TOK and the second token part RND to the external device 40. In another example, the mobile device 10 may perform some function using the first token part TOK and the second token part RND and then send a result of that function to the external device 40. The second token part RND may have a period of validity. In use, the token-issuing entity 50 can send a plurality of second token parts RND at spaced apart times.

The second token part can be a random string, or a pseudo-random string. The second token part can be short enough to fit within the payload of a single SMS message. The ETSI specification TS 23.040 places an upper limit of 160 characters, or 1280 bits, on a length of an SMS message. In an example, the SMS message can include a token identifier which identifies the first token part associated with the second token part carried in the SMS. The identifier can have an example length of 160 bits. This leaves space in a single SMS message for a second token part of up to 1120-bits. In an example, the second token part can be a random/pseudo-random string of 128-bits, but may be longer. The random string is generally shorter than the token it protects. A token may be quite large. For tokens based on a digital signature, 2048-bits is an appropriate size.

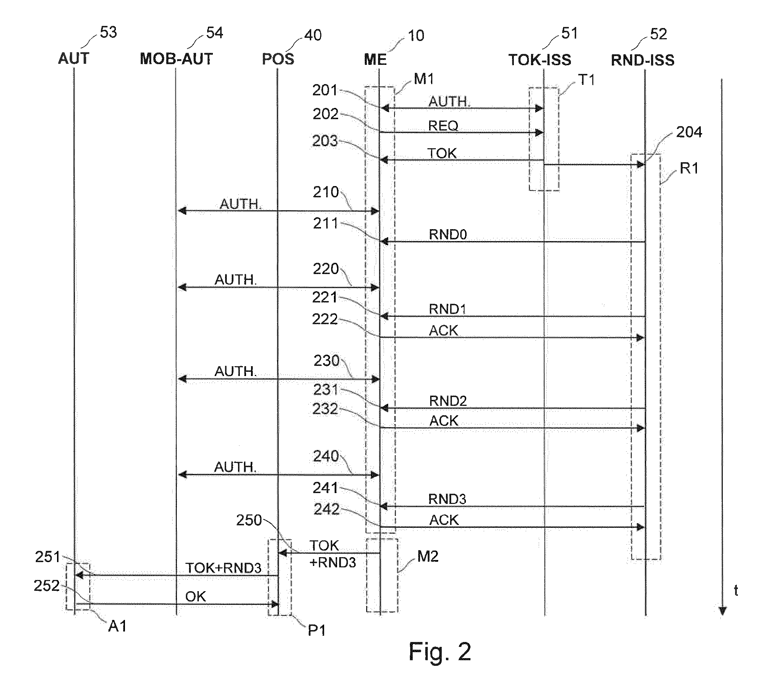

Further details of issuing and using the token parts will now be described with reference to Figure 2.

An application M1 runs on ME 10. Application M1 may operate without the support of a 'secure element'. Therefore, it is less secure than a conventional secure application, such as for example a GSM authentication or an EMV payment application that operates with direct support from a secure element. Application M1 connects to an application T1 running on TOK-ISS 51. In an example, M1 can establish a Hypertext Transfer Protocol Secure (HTTPS) communication channel with T1. The method can include a step 201 of M1 authenticating with respect to T1 using, for example, a password and login. At step 202 M1 makes a request for a number of payment tokens. The value and conditions of use of these tokens is determined by a contract between the holder of the authentication details and the token issuer. The server process T1 implements rules based on this contract which are used to determine the response to the ME's request. Possible responses are to issue all, some or none of the requested tokens. A first token part TOK is sent (step 203) to M1. The first token part TOK is stored at ME for later use. The notion of a token is linked to the contract, referred to above, between the token holder (who is also the holder of the authentication details) and the token issuer. The server process T1 is also connected to a server process R1 running on RND-ISS. As described above, the processes T1, R1 may be run on servers connected across a network or the two processes T1, R1 may be run on the same server. For every first token part issued to ME, T1 also sends the first token part to R1 (step 204). R1 can store the first token part in a suitable data-structure, structR1, and generate a second token part to associate in a one-to-one relationship with the first token part just stored. In an example, the second token part is a 128-bit random string. Process T1 may just notify R1 that it has issued a token, without the need to send the token part.

Process R1 sends the second token part RND to M1 via a second communication channel (33, Fig. 1). An authentication of the second communications channel may occur at step 210 before the mobile device ME can receive the second token part RND. For example, MOB-AUT 54 may authenticate the SIM card 13 at the mobile device ME. R1 may issue the second token part RND based on a result of a successful authentication, or may issue the second token part RND independently of the authentication of ME, and rely on the authentication procedures of the mobile network to determine whether the second token part RND is sent to M1. A second token part RND is sent to M1 at step 211.

In one example, there is a single second token part RND. In another example, and as shown in Figure 2, second token parts (RND0, RND1, RND2,...) are sent from R1 to M1 at spaced-apart times. The sending of further second token parts is shown at steps 221, 231, 241. The second token parts may be sent at any suitable time interval, e.g. minutes, hours, daily or a time interval which is more or less often. The interval between sending second token parts may be fixed, or may vary. Each of the second token parts (RND0, RND1, RND2,...) has a limited period of validity. The period of validity can be set in various ways. In one example, the period of validity can expire a fixed time period after a second token part RND is issued. In another example, a first of the second token parts RND can expire when RND-ISS determines that a subsequent one of the second token parts RND has been received by the ME. Referring to Figure 2, the ME sends an acknowledgement of receipt of a second token part RND1 at step 222. When RND-ISS receives this acknowledgement it knows that ME has received RND1 and can therefore terminate the period of validity of RND0. The ME receives a second token part RND2 at step 231 and acknowledges receipt of RND2 at step 232. RND-ISS terminates the period of validity of RND1. Similarly, the ME receives a second token part RND3 at step 241 and acknowledges receipt of RND3 at step 242. RND-ISS terminates the period of validity of RND2.

In an example, the ME does not need to acknowledge receipt of the first of the second token parts, RND0. This saves bandwidth. The first of the second token parts, RND0, is valid from the time of issue by RND-ISS.

The lower part of Figure 2 shows the process of using a token. The user of the mobile device ME 10 performs a transaction. The mobile device ME communicates with a point-of-sale device POS 40 at step 250. At the time of the transaction the valid second token part is RND3. Therefore, the transaction uses the first token part TOK and the second token part RND3 in this transaction. The point-of-sale device POS 40 sends the first and second token parts (TOK, RND3), or some value which is based on the first and second token parts (TOK, RND3), to the authorisation entity AUT 53. As described above, ME may send TOK and RND3 to POS 40, or may perform some function using TOK and RND3 and send the result of that function to POS 40. The authorisation entity AUT 53 runs an authorisation process, A1, which checks whether the first and second token parts (TOK, RND3) received from POS, or some value based on TOK and RND3 received from ME, match those that were issued. The authorisation entity AUT 53 replies to POS with an OK or not OK (NOK) message. The transaction is authorised, or not authorised, in response to receiving this message 252 from AUT. The token-issuing process R1 and the token authorisation process A1 can be run on the same server, or on different servers. If R1 and A1 are on the same server, then RND-ISS 52 and AUT 53 are the same machine. If R1 and A1 are run on different servers then the same data structure (e.g. structR1 described below) can be used for both R1 and A1. Any known distributed database technology can be used to implement this requirement.

An example form of the data structure structR1 which can be used by the token-issuing process R1 and authorisation process A1 is described below:

```
 structR1 {
       TOK string,
       TOKid string,
       SPENT boolean,
       RND array of strings,
       PHONE string,
       DToI string,
       LIS int,
       LAC int,
 }
```

where:
TOK is a first token part;
TOKid is an identifier of the first token part which is used to associate the first token part and second token part when sending the second token part;
SPENT indicates if a token has been spent;
RND is an array of second token parts;
PHONE is a phone number to which the second token parts are delivered;
DToI is a string recording date and/or time of issue of RND;
LIS is an index into the array RND identifying the last issued second token part;
LAC is an index into the array RND identifying the last acknowledged second token part.
The two index entries (LIS, LAC) into the array RND allow A1 to work out which RND string is the currently valid string for this token. StructR1 is a record for one token. In practice there may be a table of records, tableR1, indexed on TOKid as the shared data structure.

The data structure may store another identifier of a mobile device or subscriber such as an International Mobile Subscriber Identity (IMSI), in addition to, or instead of, the phone number.

When the first random string, RND0, is issued, process R1 records the date and time of issue, DToI. Process R1 implements a rule that determines when the next random string in the series is to be issued. The rules depend on the security policy that the token issuer wishes to impose. One alternative is to reissue random strings at intervals determined by the value of the token: a higher frequency of reissue for tokens of higher value. Another alternative is to reissue random strings following detection of events that may signify an increase in risk. One such indicator is a change of location of the transaction. If a series of transactions from a given mobile equipment is presented at points of sale within a restricted geographical area, as determined from, for example the identity of the point of sale terminals, a transaction from a point of sale terminal outside the restricted area from the same mobile equipment may initiate a reissue of the random string for other tokens held on that mobile equipment.

The variable, LIS, keeps track of the last issued random string. When its value is i, the last issued random string is RNDᵢ. Random strings RND₁, RND₂, ... RNDₙ are renewals of previous random strings. A renewal only becomes effective after RND-ISS has received an acknowledgement. When RND-ISS receives the acknowledgement for RNDᵢ, it sets LAC (last acknowledged random string) to i. This invalidates all the previously issued random strings: RND₀-RNDᵢ₋₁. In other words, a token will be accepted by the authentication server if and only if the random string accompanying the token matches RND_{LAC} or a later issued random string.

The contract between the token issuer and the customer, the conditions of which determine the workings of the client process, M1, and the server process, T1, can include a rule that stipulates whilst the first token parts may be issued as described above to an http address, the second token parts should be delivered via the second communications channel.

As explained above, an authentication entity MOB-AUT 54 is associated with the communications network 32. MOB-AUT 54 can authenticate the identity of the subscriber using a challenge-response mechanism. If the authentication is successful, the mobile network sets up a secure channel between the mobile device ME and the base station to which the mobile device ME is connected. Both authentication and the setting up of a secure channel require the presence of a secure element, such as a SIM card 13, to execute cryptographic functions. In a GSM system the challenge, of the challenge-response mechanism, is a 128-bit random number, RAND. The mobile device receives the challenge and passes it to the SIM card, which uses it to compute a response, SRES. SRES is a function of an encryption algorithm, A3, and two parameters: a key, Ki, which identifies the subscriber and the challenge, RAND: A3(Ki, RAND). The authentication entity MOB-AUT carries out the same operation. If the result obtained from the SIM is the same as that obtained by the mobile network's authentication entity MOB-AUT, the authentication succeeds. If the authentication succeeds, the SIM card computes a so called ciphering key, Kc, which is used to encrypt communication between the mobile equipment and the base station to which it is connected. The ciphering key is computed using the same parameters with a different encryption algorithm: A8(Ki, RAND).

As described above, the token-issuing entity 50 only sends the second token part RND to a mobile device having a pre-registered number/identifier, an IMSI, for example. In a GSM system, the IMSI is held in a secure element, a SIM card for example. The initial steps of GSM call set-up include a step in which the mobile device ME sends a Service Request message to the mobile network, this message includes the IMSI. The IMSI is the primary key to the records in the Home Location Register (HLR). The HLR records contain the information that is used by the authentication entity MOB-AUT to locate the subscriber's key Ki. This arrangement ensures that the second communications channel cannot be set up without the identifier, IMSI, which is the same identifier that the token issuer TOK-ISS uses to identify the authorised destination for the second token part RND. As the IMSI is held in a secure element the second channel can be said to be secured by means of the secure element, the SIM in this example.

### Attack scenarios

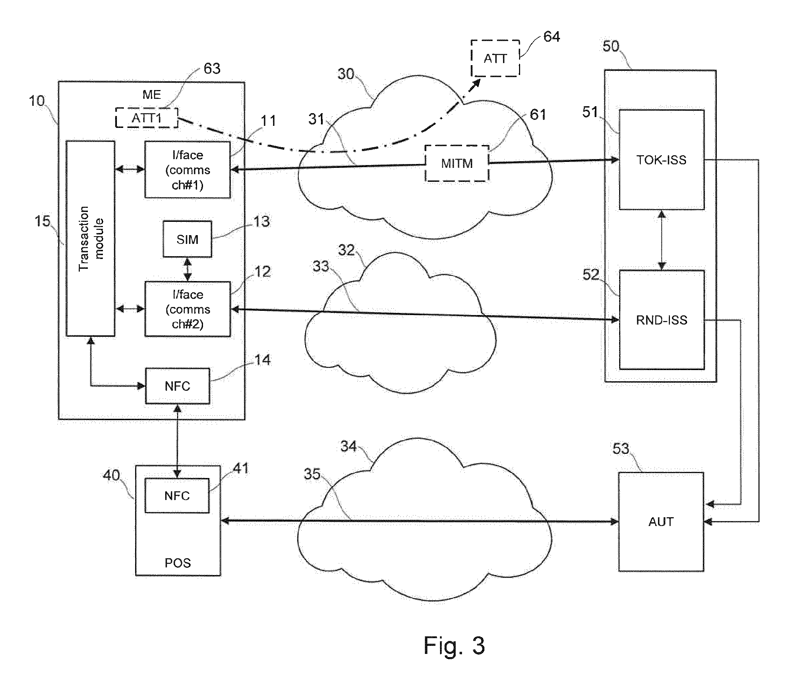

Figure 3 schematically shows the communications system of Figure 1 with some possible sources of attack. One possible source of attack is a 'man-in-the-middle' (MITM) 61. MITM 61 is located at some point along the first communications channel 31 and can intercept communications between the token-issuing entity 50 and mobile device ME 10. The sending of first and second token parts via two communication channels 31, 33 makes this kind of attack more difficult. While the MITM 61 may be able to intercept the first token part TOK sent via the first communications channel 31, it will not be able to intercept the second token part RND sent via the second communications channel 33. The second communications channel 33 is typically a more secure/trusted channel, and will be more difficult to intercept. Also, the limited period of validity of the second token part RND means that any second token part RND which is acquired will have a limited period in which it can be used.

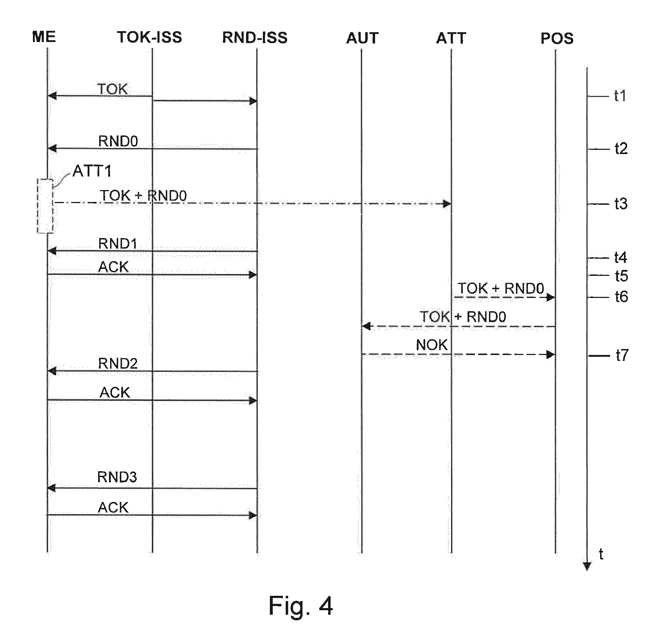

A further source of attack is shown in Figure 3 as ATT1 63 and ATT 64. ATT1 can represent malware on the mobile device ME. ATT represents an external device, such as an attacker's mobile device. The malware ATT1 may acquire token parts and send them to the external device ATT. Figure 4 shows a possible timeline for this scenario. The mobile device ME receives a first token part TOK at time t1 and a second token part RND0 at time t2 in the same manner as described above. Malware ATT1 sends the first token part TOK and the second token part RND0 to the attacker's device at time t3. RND-ISS sends another second token part RND1 to ME at time t4. At time t5 RND-ISS receives an acknowledgement of receipt of RND1 and terminates the period of validity of RND0. The attacker presents the device, ATT, to a reader POS at time t6 in order to spend the token. When the first token part TOK and second token part RND0, or some value based on the first token part TOK and second token part RND0, is received by the authorisation server AUT the server refers to structR1 and finds that RND0 is no longer valid. AUT refuses the transaction. The periodic renewal of the second token part RND helps to prevent unauthorised third parties from using tokens. Any stolen tokens have to be spent within imposed time limits, which makes it harder to mount automated attacks. The mobile device is always in receipt of at least one valid second token part RND. In another example (not shown in Figure 4), the authorised user ME spends the token before the attacker attempts to spend the same token. This will also result in a refusal of the transaction by AUT as the token is recorded as 'spent' when it is used, thereby preventing unauthorised parties from reusing the same token.

In the examples described above the second token part (or parts) are sent via a second communications channel, which is deemed to be more secure or trusted than a first communications channel. In another example, the first communications channel may be deemed to be more secure, or trusted, than the second communications channel. The first token part TOK is sent via the first (more secure/trusted) communications channel and the second token part RND is sent via the second (less secure/trusted) communications channel.

The second token part RND may be pseudo-random string. A series of pseudo random numbers can be generated by the token-issuing entity RND-ISS by applying, for example, a trapdoor function to a seed. The particular property of a trapdoor function, tf, is that it is computationally impractical to recover the seed from the return value of tf(seed). The "pseudo" in "pseudo-random" refers to the deterministic nature of the process. The pseudo random string can be encrypted, for example, as AES(key, RNDₙ) or AES(key, RNDₙ, n), where AES is an Advanced Encryption Standard encryption function and (key, RNDₙ, n) are inputs to the function.

As described above, the mobile device ME can compute a result of a function using the first and second token parts TOK, RND, and present that result to the POS device. The result of that function may be called cTOK (cryptographic token). The second token part (random string) can be used as a cryptographic key to produce the next cTOK:
AES(RNDₙ, TOK) returns cTOKₙ
The result cTOK may be formatted in the same way as a EuroPay, MasterCard and Visa (EMV) payment cryptogram. To verify or authenticate cTOKₙ, the authorisation entity AUT carries out the same computation using its own copies of the parameters and compares the result with cTOK received from the mobile device ME.

Multiple second token parts RND can be sent to a mobile device ME in a single SMS. Each second token part RND corresponds to a different first token part.

A method performed at an authorisation entity 53 can comprise:
receiving a token from a point-of-sale device 40, the token associated with a transaction performed between a mobile device 10 and a point-of-sale device 40, wherein the token is based on a first token part TOK and a second token part RND;
determining if the transaction is approved by:
computing a valid token using a first token part TOK and a second token part RND; and,
comparing the received token with the valid token.

If the comparison of the received token with the valid token gives a positive result (i.e. received token = valid token), then the transaction is authorised. Approval of a transaction is also based on whether the token is unspent. The computation of the valid token at the authorisation entity can use the same method as performed locally at the mobile device. For example, if the mobile device combines the first token part TOK and the second token part RND to derive a token for sending to POS 40, the authorisation entity can also combine the first token part TOK and the second token part RND to derive a valid token for comparison with the received token. In situations where the mobile device derives a token by computing a function of the first token part TOK and the second token part RND, or uses the second token part RND as an encryption key for the first token part TOK, the authorisation entity can perform the same technique to compute the valid token.

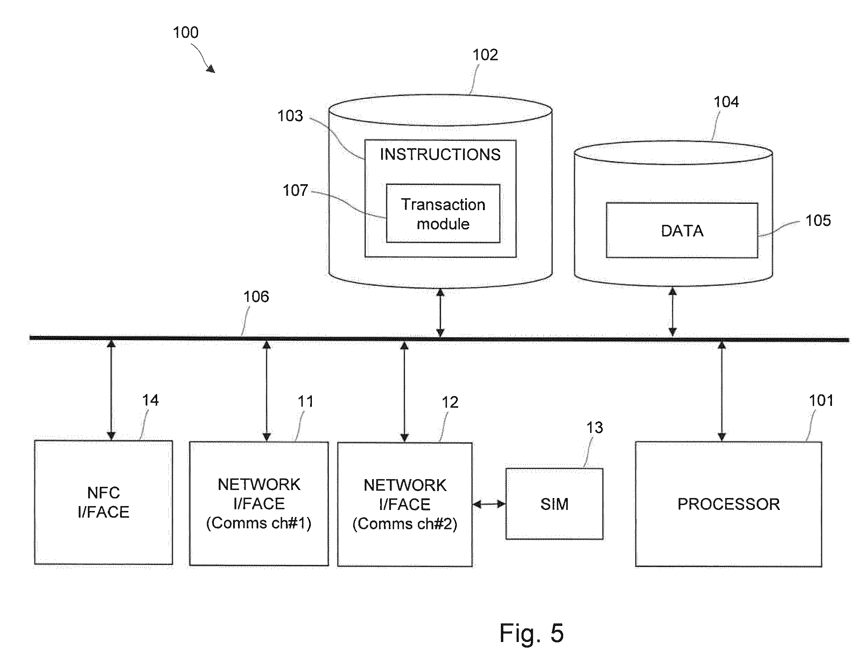

Figure 5 shows an exemplary processing apparatus 100 which may be implemented as any form of a computing and/or electronic device, and in which embodiments of the system and methods described above may be implemented. Processing apparatus 100 can be provided at the mobile device ME 10. Processing apparatus may implement the method shown in any of Figures 2 or 4. Processing apparatus 100 comprises one or more processors 101 which may be microprocessors, controllers or any other suitable type of processors for executing instructions to control the operation of the device. The processor 101 is connected to other components of the device via one or more buses 106. Processor-executable instructions 103 may be provided using any computer-readable media, such as memory 102. The processor-executable instructions 103 can include instructions for implementing a transaction module 107. The processor-executable instructions 103 can comprise instructions for implementing the functionality of the described methods. The memory 102 is of any suitable type such as read-only memory (ROM), random access memory (RAM), a storage device of any type such as a magnetic or optical storage device. Additional memory 104 can be provided to store data 105 used by the processor 101. The processing apparatus 100 comprises network interfaces 11, 12 for interfacing with communications channels 31, 33 (Figure 1). The processing apparatus 100 also comprises an NFC interface 14.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method performed at a mobile device (10) comprising:
receiving a first token part (TOK) via a first communications channel (31);
receiving a second token part (RND) via a second communications channel (33);
storing the first token part (TOK) and the second token part (RND) at the mobile device (10),
wherein the first token part (TOK) and the second token part (RND) are for use in a token-based transaction between the mobile device (10) and an external device (40), and wherein the first token part (TOK) and the second token part (RND) are required for the token-based transaction.

2. A method according to claim 1 wherein the second token part (RND) has a period of validity.

3. A method according to claim 2 wherein the step of receiving the second token part (RND) receives a plurality of second token parts at spaced apart times.

4. A method according to claim 3 wherein the mobile device (10) receives a first of the second token parts (RND) and a second of the second token parts (RND), and wherein the period of validity of the first of the second token parts is based on a time when an acknowledgement of the second of the second token parts is received by a token issuing entity (50).

5. A method according to any one of the preceding claims further comprising at least one of:
the second token part (RND) has a lower number of bits than the first token part (TOK);
the second token part (RND) is a pseudo-random string or a random string.

6. A method according to any one of the preceding claims wherein the step of receiving the second token part (RND) further comprises receiving an identifier of the first token part that the second token part is associated with.

7. A method according to any one of the preceding claims wherein the second communications channel (33) is more secure, or more trusted, than the first communications channel (31).

8. A method according to claim 7 wherein the second communications channel (33) is a channel requiring authentication of a secure element at the mobile device (10).

9. A method according to claim 7 or 8 wherein the second communications channel (33) is a Short Message Service channel.

10. A method according to any one of the preceding claims further comprising performing a token-based transaction between the mobile device (10) and an external device (40) using a wireless transmission protocol, the transaction comprising:
transmitting a token to the external device (40) which is based on the first token part (TOK) and the second token part (RND).

11. A method according to claim 10 wherein the wireless transmission protocol is a near field communication protocol using a third communications channel which is not the first communications channel or the second communications channel.

12. A method according to claim 10 or 11 wherein the token transmitted to the external device (40) is one of:
the first token part (TOK) and the second token part (RND);
a token which is a function of the first token part and the second token part;
a token which is computed by using the second token part as an encryption key for the first token part

13. A method performed at a token-issuing entity (50) comprising:
transmitting to a mobile device (10) a first token part (TOK) via a first communications channel (31);
transmitting to the mobile device (10) a second token part (RND) via a second communications channel (33);
wherein the first token part (TOK) and the second token part (RND) are for use in a token-based transaction between the mobile device (10) and an external device (40), and wherein the first token part (TOK) and the second token part (RND) are required for the token-based transaction.

14. Apparatus for use at a mobile device (10), wherein the apparatus is configured to:
receive a first token part (TOK) via a first communications channel (31);
receive a second token part (RND) via a second communications channel (33);
store the first token part (TOK) and the second token part (RND) at the mobile device (10),
wherein the first token part (TOK) and the second token part (RND) are for use in a token-based transaction between the mobile device (10) and an external device (40), and wherein the first token part (TOK) and the second token part (RND) are required for the token-based transaction.

15. Apparatus for use at a token issuing entity (50), wherein the apparatus is configured to:
transmit to a mobile device (10) a first token part (TOK) via a first communications channel (31);
transmit to the mobile device (10) a second token part (RND) via a second communications channel (33);
wherein the first token part (TOK) and the second token part (RND) are for use in a token-based transaction between the mobile device (10) and an external device (40), and wherein the first token part (TOK) and the second token part (RND) are required for the token-based transaction.
